# EUROPÄISCHE PATENTSCHRIFT

(11) **EP 0 377 110 B1**
(45) Veröffentlichungstag und Bekanntmachung des Hinweises auf die Patenterteilung: **17.03.1993**
(21) Anmeldenummer: 89121811.7
(22) Anmeldetag: 25.11.1989
(51) Int. Cl.: A47J 37/10, A47J 27/04

(54) **Vorrichtung zum Erhitzen insbesondere von Nahrungsmitteln**
Heating device, in particular for foodstuffs
Dispositif chauffant notamment pour produits alimentaires

(30) Priorität: 07.12.1988 DE 3841074
(43) Veröffentlichungstag der Anmeldung: 11.07.1990
(73) Patentinhaber: Esser, Hans-Peter, D-50129 Bergheim (DE)
(72) Erfinder: Esser, Hans-Peter, D-50129 Bergheim (DE)

(56) Entgegenhaltungen:
- EP-A- 0 165 187
- EP-A- 0 251 947
- DE-A- 3 639 872
- DE-U- 8 810 297
- DE-U- 8 810 299
- FR-A- 964 941
- FR-A- 1 215 060
- FR-A- 2 593 587

## Beschreibung

Gegenstand der Erfindung ist eine zum Erhitzen insbesondere von Nahrungsmitteln dienende Vorrichtung gemäß dem Oberbegriff des Patentanspruchs 1.

Aus FR-A-964 941 sind elektrische Vorrichtungen dieser Art für Haushalts- und Küchenzwecke bekannt, bei denen eine einfache eckige oder runde Abdeckhaube über das zu erhitzende Gut gestülpt und auf eine Bodenplatte aufgesetzt wird, auf der das zu erhitzende Gut liegt und die ähnlich einer Elektroherd-Kochplatte den eingebauten elektrischen Heizkörper enthält. Mit diesen Vorrichtungen konnten ähnlich wie in einem Elektrobackofen Kuchen und Brote durch Unterhitze abgebacken werden.

Die der Erfindung zugrunde liegende Aufgabe bestand darin, eine Vorrichtung der eingangs genannten Art so auszubilden und weiterzuentwickeln, daß ihre Anwendbarkeit im Haushalts- und Küchenbereich umfangreicher und vielfältiger ist.

Ausgehend davon, daß ein Dampfgenerator für die zentrale Herstellung von Wasserdampf im Haushalts bzw. Küchenbereich zur Verfügung steht, geschieht die Lösung der Aufgabe erfindungsgemäß durch eine Ausbildung der eingangs genannten Vorrichtung mit den im Kennzeichnungsteil des Patentanspruchs 1 aufgeführten Merkmalen. Vorteilhafte Ausführungen der erfindungsgemäßen Vorrichtung sind in den Unteransprüchen angegeben.

Die erfindungsgemäße Vorrichtung hat den großen Vorteil, daß mit ihr zur Ergänzung eines beispielsweise in dem DE-GM 88 10 297 oder in dem DE-GM 88 10 299 beschriebenen Gerätes für die zentrale Dampferzeugung im Haushalts- und Küchenbereich der hergestellte Dampf in dem glockenförmigen Vorrichtungsgehäuse konzentriert und angesammelt seiner Verwendung zugeführt werden kann. Das Gehäuse kann über Tiefkühlgut übergestülpt werden, um dieses mit dem unter das Gehäuse eingeleiteten, konzentrierten Dampf sehr schnell aufzutauen. Gleichartig kann die Vorrichtung auch zum Erwärmen von Tellergeschirr mit Dampf angewendet werden. Weiterhin kann das Gehäuse haubenartig auf bzw. über einen Topf aufgesetzt werden, um Gargut von oben her zu bedampfen. Zusätzlich zu einer Behandlung von Nahrungsmitteln mit Dampf kann durch Einschalten der in dem glockenförmigen Vorrichtungsgehäuse enthaltenen elektrischen Heizeinrichtung auch Oberhitze auf die Nahrungsmittel abgegeben werden. Das glockenförmige Gehäuse kann auch in einem konventionellen Backofen eingesetzt werden oder auf eine andere, Unterhitze erzeugende Heiz- oder Herdplatte aufgesetzt werden, um zum Beispiel Bratgut, Kuchen oder Brot zusätzlich zu der Unterhitze mit der Dampfzufuhr und ggf. auch der Oberhitze der erfindungsgemäßen Vorrichtung zu behandeln, wobei die Dampfbehandlung den großen Vorteil hat, daß das bei herkömmlichem Braten oder Backen mit Unterhitze und Oberhitze eintretende Austrocknen des Brat- oder Backgutes vermieden wird.

Die Dampfheizung (Dampfzufuhr zum Inneren des Vorrichtungsgehäuse) und die elektrische Heizeinrichtung können gleichzeitig oder auch wechselweise und hierbei unabhängig voneinander arbeiten. Insbesondere bei gleichzeitiger Dampfzufuhr und Einschaltung der Heizeinrichtung kann der von einem drucklos arbeitenden Dampfgenerator erzeugte Sattdampf in dem Gehäuse der erfindungsgemäßen Vorrichtung zu Heißdampf weitererhitzt werden, z. B. zum Behandeln von Nahrungsmitteln in trockener Heißdampfatmosphäre. Die Temperatur im Inneren des glockenförmigen Gehäuses kann durch taktendes Ein- und Ausschalten der Heizeinrichtung thermostatisch geregelt werden. Ein weiterer großer Vorteil der erfindungsgemäßen Vorrichtung ist, daß das glockenförmige Gehäuse auch herumgedreht, mit der offenen Gehäuseseite nach oben, aufgestellt und angewendet werden kann, beispielsweise mit einem auf die offene Gehäuseseite aufgesetzten Rost, auf dem z. B, Fischwaren mit Dampfzufuhr zum Vorrichtungsgehäuse gedünstet oder Fleischwaren durch Einschalten der Heizeinrichtung gegrillt werden können. Beispielsweise kann auch ein Entsaftertopf auf das herumgedrehte glockenförmige Gehäuse der erfindungsgemäßen Vorrichtung aufgesetzt und von unten her mit dem der Vorrichtung zugeführten Dampf beaufschlagt werden, so daß das bisher für den Entsafter benötigte Kochgefäß für die Dampferzeugung entfallen kann und der Vorteil besteht, den Dampf mittels der Heizeinrichtung der erfindungsgemäßen Vorrichtung über den Sattdampfzustand noch weiter erhitzen zu können. Bei der Anwendung der Vorrichtung als Haube wird vorzugsweise ein Untersatz vorgesehen, der eine gitterartige Auflage für das zu erhitzende Gut und darunter eine schalenartige Vertiefung aufweist, in der z. B. auch Dampfkondensat aufgefangen werden kann.

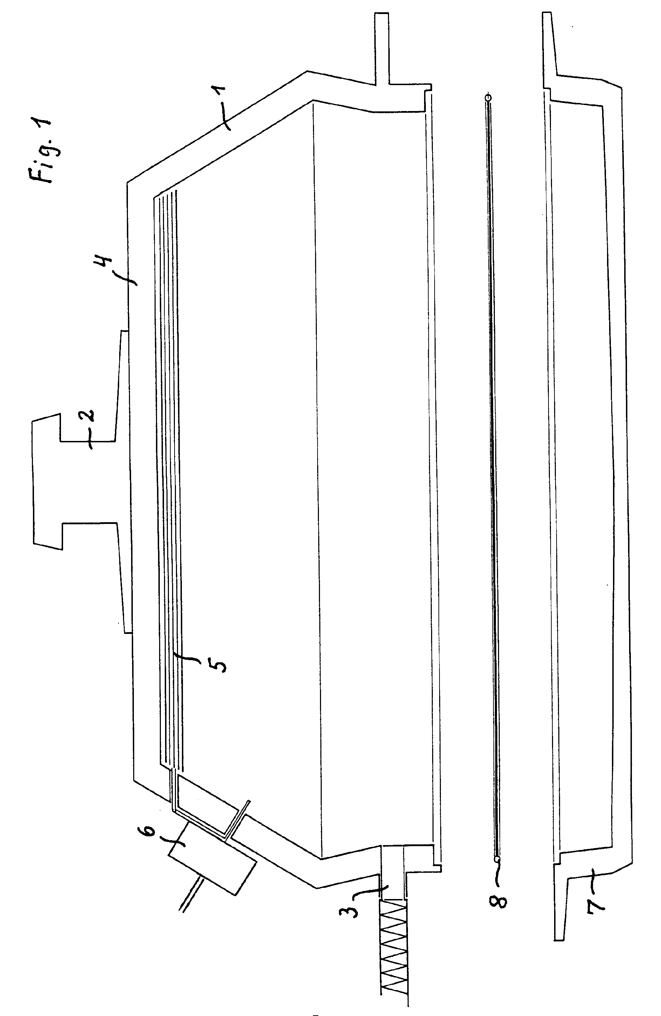

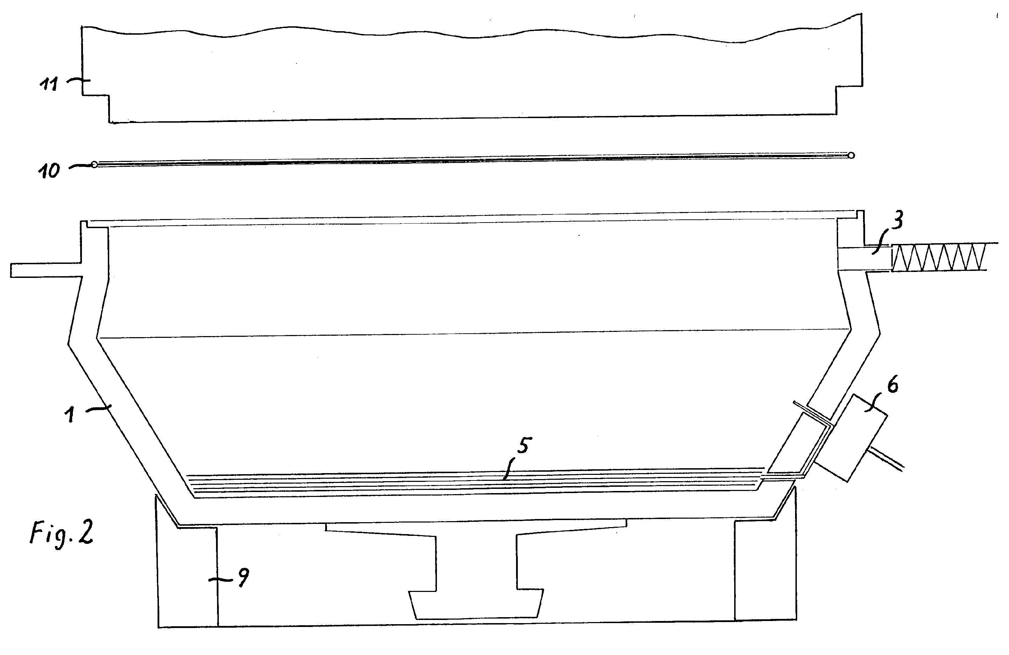

Anhand der Zeichnungen wird ein Ausführungsbeispiel für die erfindungsgemäße Vorrichtung erläutert. Es zeigt Figur 1 eine Vorrichtung nach der Erfindung in haubenförmiger Anwendung, Figur 2 die gleiche Vorrichtung, jedoch in der topfförmigen Anwendung.

Die erfindungsgemäße Vorrichtung besteht im wesentlichen aus einem glockenförmigen Gehäuse 1 mit einem Handgriff 2, mit einem Anschluß 3 für eine Dampfleitung zum Zuführen von Dampf in das Innere des Gehäuses 1, mit einem innenseitig im Bereich des Gehäusebodens 4 angeordneten elektrischen Strahlungsheizkörper 5 und mit einem Thermostatregler 6, dessen Temperaturfühler in das Innere des Gehäuses 1 hineinragt und der den Strahlungsheizkörper in Abhängigkeit von der Temperatur im Inneren des Gehäuses schaltet. Für die in Figur 1 dargestellte haubenförmige Anwendung der Vorrichtung ist das Gehäuse 1 auf einen die Abdeckung der offenen Gehäuseseite bildenden Untersatz 7 aufsetzbar, der eine abnehmbare gitterartige Auflage 8 für das zu erhitzende Gut aufweist und unter der Auflage schalenartig vertieft ausgebildet ist, um Dampfkondensat oder auch von dem zu erhitzenden Gut ablaufende Flüssigkeiten auffangen zu können. Der Strahlungsheizkörper 5 ist bei dem dargestellten Ausführungsbeispiel der erfindungsgemäßen Vorrichtung als eine ebene Schicht ausgebildet, die dicht und fest an die Wandung des Gehäuses 1 angegossen ist und die Innenseite des Gehäusebodens 4 bildet. Dies hat den Vorteil, daß das Gehäuse 1 bei der in Figur 2 dargestellten topfartigen Anwendung einen ebenen Topfboden hat, der bequem und gründlich von heruntergefallenen Speiseresten oder dergleichen gereinigt werden kann oder auch beim Betrieb der Vorrichtung mit Flüssigkeit bedeckt sein kann. In diesem Zusammenhang mündet der Anschluß 3 für die Dampfzuführungsleitung auch in einem Abstand von der Gehäusebodeninnenseite in das Innere des Gehäuses 1 ein. Für die in Figur 2 dargestellte topfartige Anwendung ist das Gehäuse 1 auf seiner Außenseite mit einer Stützfläche ausgebildet, die zu einem sockelartigen Gestell 9 paßt und mit der das Gehäuse 1, mit der offenen Gehäuseseite nach oben, standsicher auf das Gestell 9 aufsetzbar ist. Das Gehäuse 1 ist an der offenen Gehäuseseite so als Ringfläche ausgebildet, daß bei der in Figur 2 dargestellten topfartigen Anwendung gitterförmige Einsätze 10 zum Grillen oder Dünsten von Nahrungsmitteln oder zum Beispiel auch ein an seiner Unterseite einen Dampfeintritt enthaltender Entsaftertopf 11 aufgesetzt werden kann.

Der Thermostatregler 6 kann separat von dem Gehäuse 1 vorgesehen sein und durch eine elektrische Anschlußleitung mit seinem Temperaturfühler und mit dem Strahlungsheizkörper verbunden sein.

## Patentansprüche

1. Vorrichtung zum Erhitzen insbesondere von Nahrungsmitteln mit einem glockenförmigen Gehäuse, das an Handgriffen als Haube über das zu erhitzende Gut stülpbar ist, und mit einer elektrischen Heizeinrichtung zum Beheizen des von dem Gehäuse und einer Abdeckung der offenen Gehäuseseite eingeschlossenen Raumes, dadurch gekennzeichnet, daß das Gehäuse (1) einen Anschluß (3) für eine Dampfleitung zum Zuführen von Dampf in das Innere des Gehäuses (1) aufweist, daß die elektrische Heizeinrichtung (5) aus einem elektrischen Strahlungsheizkörper besteht, der als dicht und fest mit der Wandung des Gehäuses (1) verbundener Bestandteil des Bodens (4) des Gehäuses (1) ausgebildet ist, daß der Anschluß (3) für die Dampfleitung in einem Abstand vom Gehäuseboden in das Innere des Gehäuses (1) einmündet, und daß das Gehäuse (1) mit einem die elektrische Heizeinrichtung (5) in Abhängigkeit von der Temperatur im Inneren des Gehäuses (1) schaltenden Thermostatregler (6) versehen ist.

2. Vorrichtung nach Anspruch 1, dadurch gekennzeichnet, daß das Gehäuse (1) mit seiner offenen Gehäuseseite auf einen Untersatz (7) aufsetzbar ist, der eine gitterartige Auflage (8) für das zu erhitzende Gut aufweist und unter der Auflage mit einer Vertiefung als Auffangschale ausgebildet ist.

3. Vorrichtung nach Anspruch 1, dadurch gekennzeichnet, daß das Gehäuse (1) auf seiner Außenseite mit einer Stützfläche ausgebildet ist, mit der das Gehäuse (1), topfartig mit der offenen Gehäuseseite nach oben, auf einen Sockel (9) standsicher aufsetzbar ist.

4. Vorrichtung nach Anspruch 3, dadurch gekennzeichnet, daß das Gehäuse (1) an der offenen Gehäuseseite als Ringfläche zum Aufsetzen eines gitterförmigen Einsatzes zum Grillen oder Dünsten, eines Entsaftertopfes oder dergleichen ausgebildet ist.

## Claims

1. A device for the heating more particularly of foodstuffs, having a bell-shaped casing which can be placed by means of handles as a hood over the material to be heated, and an electric heating device for heating the space enclosed by the casing and a cover of the open casing side, characterized in that the casing (1) has a connection (3) for a steam line for supplying steam to the interior of the casing (1), the electric heating device (5) consists of an electric radiation heating element taking the form of a component of the bottom (4) of the casing (1) connected hermetically and firmly to the wall of the casing (1), the connection (3) for the steam line discharges at a distance from the casing bottom into the interior of the casing (1), and the casing (1) has a thermostat regulator (6) which operates the electric heating device (5) in dependence on the temperature in the interior of the casing (1).

2. A device according to claim 1, characterized in that the casing (1) can be fitted by its open casing side on to a base (7) which has a grid-like support (8) for the material to be heated and is constructed with a depression acting as an intercepting bowl below said support.

3. A device according to claim 1, characterized in that the outside of the casing (1) has a supporting surface via which the casing (1) can be fitted to stand stably pot-like with the open casing side upwards on a base (9).

4. A device according to claim 3, characterized in that the casing (1) has on the casing open side an annular surface on to which a grid-shaped insert for grilling or steaming, a juice-extracting pot or the like can be fitted.

## Revendications

1. Dispositif pour chauffer notamment des produits alimentaires avec une enceinte en forme de cloche, qui est retournée à l'aide de poignée comme un couvercle au-dessus du produit à faire chauffer et avec un dispositif électrique chauffant pour chauffer l'espace compris entre l'enceinte et le recouvrement de la face ouverte de l'enceinte, caractérisé en ce que l'enceinte (1) présente une jonction (3) pour une conduite de vapeur pour l'alimentation en vapeur à l'intérieur de l'enceinte (1), en ce que le dispositif électrique chauffant (5) se compose d'un corps électrique chauffant à rayonnement qui est congru comme une partie composante du fond (4) de l'enceinte (1) reliée fixement et de manière étanche à la paroi de l'enceinte (1), en ce que la jonction (3) débouche à l'intérieur de l'enceinte (1) à distance du fond de l'enceinte pour la conduite de vapeur, et en ce que l'enceinte (1) est munie d'un régulateur (6) à thermostat commandant le dispositif électrique chauffant en fonction de la température à l'intérieur de l'enceinte (1).

2. Dispositif selon la revendication 1, caractérisé en ce que l'enceinte (1) peut être posée sur un support (7) avec sa face ouverte de l'enceinte, qui présente un revêtement grillagé (8) pour le produit à faire chauffer et est congrue sous le revêtement avec un évidement comme bac de réception.

3. Dispositif selon la revendication 1, caractérisé en ce que l'enceinte (1) est congrue sur sa face externe avec une surface d'appui avec laquelle l'enceinte (1) du type marmite peut être posée de manière stable sur un socle (9), la face ouverte de l'enceinte vers le haut.

4. Dispositif selon la revendication 3, caractérisé en ce que l'enceinte (1) sur la face ouverte de l'enceinte est congrue comme une surface annulaire pour poser un élément grillagé pour griller ou cuire à l'étuvée ou pour poser un récipient de centrifugeuse ou similaires.
